# EUROPÄISCHE PATENTANMELDUNG

(11) **EP 4 528 411 A1**
(43) Veröffentlichungstag der Anmeldung: **26.03.2025**
(21) Anmeldenummer: 23198973.2
(22) Anmeldetag: 22.09.2023
(51) Int. Cl.: G05B 19/418

(54) **VERFAHREN ZUR AUSWAHL EINES COMPUTERGESTÜTZTEN ANALYSEMODELLS**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Es wird ein Verfahren zur Auswahl eines computergestützten Analysemodells zur Verwendung bei der Analyse von optischen Anomalien eines auf einer Fertigungsstraße produzierten Produkts vorgeschlagen, mit den Schritten
- Bereitstellen zumindest eines computergestützten Analysemodells
- Ermitteln zumindest einer Eigenschaft des Produkts und/oder zumindest eines Produktionsparameters
- Auswählen eines einer Produktart zugeordneten Analysemodells aus einer Mehrzahl von Produktarten zugeordneten Analysemodellen unter Einbeziehung der zumindest einen ermittelten Eigenschaft des Produkts und/oder des zumindest einen ermittelten Produktionsparameters
- Untersuchen des Produkts unter Verwendung des ausgewählten Analysemodells.

## Beschreibung

Die Erfindung betrifft ein Verfahren zur Auswahl eines computergestützten Analysemodells zur Verwendung bei der Analyse von optischen Anomalien eines auf einer Fertigungsstraße produzierten Produkts.
Solche computergestützten Analysemodelle werden beispielsweise bei der Erkennung visueller Anomalien mit Hilfe eines visuellen Qualitätskontrollsystems verwendet. Dabei kann es vorkommen, dass die zu überwachenden Produktionslinien bzw. Fertigungsstraßen mit schnellen Produktwechseln arbeiten. In einem solchen Fall werden also von derselben Produktionslinie in unterschiedlichen Zeiträumen unterschiedliche Produkte hergestellt. Entsprechend kann es dann notwendig sein, dass das verwendete Analysemodell an das jeweilige Produkt angepasst wird. Abhängig vom aktuell produzierten Produkt können unterschiedliche optische Parameter einen Mangel anzeigen oder aber hinsichtlich der Qualität des überprüften Produkts unbedenklich sein.

Das Qualitätskontrollsystem, das die anomalen Daten erkennt, befindet sich in der Regel am Ende der Produktionslinie oder der Produktionslinien. Die Anomalien können für jedes Produkt unterschiedlich sein. Beispielsweise können Anwendungsfall einer Bäckerei für unterschiedliche Produkte wie Baguettes, Brötchen und Croissants unterschiedliche optische Kriterien auf einen Qualitätsmangel hindeuten. Die möglichen Anomalien können sogar zwischen verschiedenen Produkten mehrdeutig sein, d. h. die Anomalie eines Produkts kann für ein anderes Produkt akzeptabel sein. Daher kann bei Verwendung eines auf künstlicher Intelligenz oder auf maschinellem Lernen basierenden zentralen Analysemodells dieses nicht für alle Produkte trainiert werden. Man kann für jedes Produkt individuelle Modelle trainieren. Da die Produkte in einer Produktionslinie jedoch häufig gewechselt werden, ist eine effiziente Auswahl des richtigen Modells wichtig. Es ist möglich, einen Zeitplan zu erstellen, der festlegt, wann ein Wechsel von einem Produkt zu einem anderen produzierten Produkt stattfindet. Dieses Verfahren ist fehleranfällig, da dabei nicht bestimmt wird, welches Produkt sich gerade auf der Produktionsstrecke befindet.

Aus dem Stand der Technik sind zwei Ansätze zur Lösung des Problems bekannt. Zum einen kann eine manuelle Auswahl des Produktmodells durch einen Bediener erfolgen. Die Skalierbarkeit dieses Ansatzes ist eingeschränkt, wenn neue Produkte zur Auswahl der möglichen Produkte hinzugefügt werden, und außerdem ist er fehleranfällig. Zum anderen kann ein Objekterkennungsmodell verwendet werden, welches das Produkt auf der Produktionsstrecke optisch anhand eines aufgenommenen Bildes erkennt und das entsprechende Modell lädt. Hierbei kann eine fehlerhafte Vorhersage aus der Objekterkennung ebenfalls zum Abruf eines falschen Modells führen, so dass auch dieses Verfahren fehleranfällig ist.

Die Aufgabe besteht darin, eine effiziente Auswahl des passenden Analysemodells zur Erkennung von Anomalien eines zu prüfenden Objekts zu ermöglichen.

Erfindungsgemäß wird ein Verfahren zur Verfügung gestellt, welches eine solche effiziente Auswahl des passenden Analysemodells erlaubt. Das erfindungsgemäße Verfahren zur Auswahl eines computergestützten Analysemodells zur Verwendung bei der Analyse von optischen Anomalien eines auf einer Fertigungsstraße produzierten Produkts umfasst grundsätzlich folgende Schritte:
- Bereitstellen zumindest eines computergestützten Analysemodells,
- Ermitteln zumindest einer Eigenschaft des Produkts und/oder zumindest eines Produktionsparameters,
- Auswählen eines einer Produktart zugeordneten Analysemodells aus einer Mehrzahl von jeweils Produktarten zugeordneten Analysemodellen unter Einbeziehung der zumindest einen ermittelten Eigenschaft des Produkts und/oder des zumindest einen ermittelten Produktionsparameters, und
- Untersuchen des Produkts unter Verwendung des ausgewählten Analysemodells.

Erfindungsgemäß werden somit zusätzliche Informationen über das Produkt genutzt und so ein Ansatz zur Integration von Modellen aus verschiedenen Produkten bereitgestellt. Die ermittelten Informationen zu dem Produkt und/oder zu einem Produktionsparameter lassen dabei Rückschlüsse auf die aktuell produzierte Produktart zu.

Das erfindungsgemäße Verfahren hat den Vorteil, dass die jeweils auf der Fertigungsstraße produzierten Produkte zuverlässig und effizient einem passenden Analysemodell zugeordnet werden können. Es ist möglich, alternativ oder zusätzlich zu einer optischen Analyse, beispielsweise basierend auf einer Bilderkennungssoftware, die ein von einer Kamera aufgenommenes Bild analysiert, die zumindest eine ermittelte Eigenschaft und/oder den zumindest einen ermittelten Produktionsparameter bei der Auswahl des Analysemodells zu verwenden.

Unter einer Fertigungsstraße kann dabei insbesondere eine teilautomatische oder automatische Produktionsanlage verstanden, die beispielsweise mit einem Förderband ausgestattet sein kann. Auf der Fertigungsstraße können in einem Serienbetrieb nacheinander mehrere oder viele Produkte der gleichen Produktart produziert werden.

Unter einer Produktart wird im Rahmen der vorliegenden Beschreibung insbesondere eine Mehrzahl von gleichartigen oder identischen Produkten verstanden. Insbesondere kann die Produktart beispielsweise einem Produktmodell entsprechen.

Das Untersuchen des Produkts kann dabei insbesondere auf optischem Wege, beispielsweise durch Aufnehmen eines oder mehrerer Bilder des Produkts und einer nachfolgenden Bildanalyse erfolgen. Hierbei können Anomalien oder Mängel, die optisch sichtbar sind, erkannt werden. Das erfindungsgemäße Verfahren kann somit beispielsweise im Rahmen einer Qualitätssicherung einer Produktionsanlage eingesetzt werden.

Die eindeutige Produkt-ID, beispielsweise also eine Produktidentifikationsnummer oder ein sonstiger dem Produkt zugeordneten Code, ist im Idealfall eindeutig, aber sie ist nicht zuverlässig, da sie sich im Laufe der Zeit ändern oder vom Bediener angepasst werden kann. Daher werden erfindungsgemäß alternativ oder zusätzlich zur Produkt-ID andere Parameter bei der Zuordnung der Produktart zu dem zu verwendenden Analysemodell verwendet. Das für eine Produktart relevante Analysemodell kann dann anhand der eingehenden Parameter ausgewählt werden. Diese Parameter können normalerweise diskretisiert werden. Es kann sein, dass nicht alle der Produktart zugeordneten Parameter für die Erkennung von Anomalien relevant sind, sondern dass sie für spätere Schritte, wie zum Beispiel die Verpackung, benötigt werden.

Es kann mit Vorteil vorgesehen sein, dass das Produkt direkt nach einem Wechsel einer Produktart der auf der Fertigungsstraße produzierten Produkte untersucht wird. Es ist dabei möglich, dass das Verfahren nur für das erste nach einem Wechsel der Produktart produzierte Produkt durchgeführt wird. Bei einem Wechsel der produzierten Produktart müssen im Regelfall die zur Analyse der Produkte verwendeten Parameter bzw. das verwendete Analysemodell angepasst werden. Wenn das erfindungsgemäße Verfahren für das erste produzierte Produkt nach einem solchen Wechsel der Produktart der auf der Fertigungsstraße produzierten Produkte ausgeführt wird, so kann zuverlässig das aktuell zu verwendende Analysemodell ausgewählt werden.

Es kann dabei ausreichen, das Verfahren nur für das erste nach dem Wechsel der Produktart produzierte Produkt auszuführen. Es ist aber ebenfalls möglich, das Verfahren auch ohne Wechsel der Produktart in regelmäßigen Abständen auszuführen, um so sicherzustellen, dass nicht ein Wechsel der Produktart stattgefunden hat, ohne, dass das passende Analysemodell ausgewählt worden wäre.

Es kann vorgesehen sein, dass das erfindungsgemäße Verfahren durchgeführt wird, wenn erkannt wird, dass ein Wechsel der Produktart stattgefunden hat. Hierzu kann eine optische Überprüfung jedes produzierten Produkts stattfinden. Ebenfalls ist es möglich, dass ein entsprechendes Steuersignal an die Vorrichtung, mithilfe derer das erfindungsgemäße Verfahren durchgeführt wird bzw. mithilfe derer die Produkte analysiert werden, gesendet wird. Ein solches Steuersignal kann beispielsweise von einem Kontrollsystem gesendet werden.

Gemäß einer Weiterbildung der Erfindung ist vorgesehen, dass das ausgewählte Analysemodell aktiviert bleibt, bis erkannt wird, dass eine neue Produktart auf der Fertigungsstraße produziert wird. Mit anderen Worten kann das ausgewählte Analysemodell aktiviert bleiben, solange keine Veranlassung besteht, anzunehmen, dass sich die produzierte Produktart geändert hat. Es wird so ein ressourcenschonendes Verfahren ermöglicht.

Es ist mit Vorteil möglich, dass das ausgewählte Analysemodell ein auf künstlicher Intelligenz und/oder auf maschinellem Lernen basierendes Analysemodell ist. Solche Verfahren werden bei der Analyse von optischen Anomalien und insbesondere in der Qualitätssicherung von auf einer Fertigungsstraße produzierten Produkten oftmals eingesetzt, da solche Analysemodell ein besonders effizientes Ermitteln von optischen Anomalien bzw. von Qualitätsmängeln erlaubt.

Dabei kann das zumindest eine bereitgestellte Analysemodell zur Analyse einer vorbestimmten Produktart trainiert worden sein. Ein solches Verfahren ist bei auf künstliche Intelligenz und/oder auf maschinellem Lernen basierenden Analysemodellen üblich und ermöglicht es, eine gewünschte Genauigkeit bei der Analyse zu erreichen.

Es ist möglich, dass beim Ermitteln zumindest einer Eigenschaft des Produkts und/oder zumindest eines Produktionsparameters ein nicht-optisches Verfahren verwendet wird. Ein solches Verfahren kann beispielsweise ein Wiegen, eine Temperaturmessung oder ein sonstiges nicht-optisches Messverfahren sein. Dabei kann beim Ermitteln der zumindest einer Eigenschaft des Produkts und/oder des zumindest einen Produktionsparameters, eine oder mehrere der folgenden Eigenschaften ermittelt werden: Eine Größe des Produkts, ein Gewicht des Produkts, eine Form des Produkts, eine Farbe des Produkts, und/oder eine Temperatur des Produkts. Diese Eigenschaften des Produkts bieten eine Vielzahl von Möglichkeiten, die Produktart zu identifizieren, sodass eine sichere Auswahl des zu verwendenden Analysemodells ermöglicht wird.

Ebenfalls ist es möglich, dass beim Ermitteln zumindest einer Eigenschaft des Produkts und/oder zumindest eines Produktionsparameters ein Produktionsparameter wie z.B. eine Geschwindigkeit eines Förderbands und/oder eine Produktionstemperatur ermittelt wird. Auch diese Informationen ermöglichen es, die zu analysierende Produktart mit hoher Genauigkeit zu ermitteln.

Es ist möglich, dass zusätzlich zu der ermittelten Eigenschaft des Produkts und/oder zusätzlich zu dem Produktionsparameter ein Identifikationscode des Produkts ermittelt wird. Es ergibt sich so ein Verfahren mit redundanter Informationsgewinnung, sodass die Zuverlässigkeit des Verfahrens erhöht wird. Das Ermitteln des Identifikationscodes des Produkts kann dabei beispielsweise durch ein Abfragen, ein Auslesen oder ein Empfangen des Identifikationscodes erfolgen.

Eine Weiterbildung des erfindungsgemäßen Verfahrens sieht vor, dass zusätzlich zu der ermittelten Eigenschaft und/oder zusätzlich zu dem ermittelten Produktionsparameter ein von einer Kamera aufgenommenes Bild des Produkts beim Auswählen des Analysemodells herangezogen wird. Auch hier ergibt sich durch eine Erweiterung der dem System zur Verfügung gestellten Informationen eine erhöhte Genauigkeit bei der Auswahl des zu verwendenden Analysemodells.

Es ist mit Vorteil möglich, dass das Analysemodell zumindest einen Autoencoder aufweist. Autoencoder werden häufig für eine nicht überwachte Erkennung von optischen Anomalien eingesetzt. Ein Autoencoder wird an gesunden Daten trainiert und gibt rekonstruierte Daten aus. Da das Modell nur anhand von gesunden Daten trainiert wird, können die anomalen Daten nicht gut rekonstruiert werden, weshalb sie einen höheren Rekonstruktionsfehler aufweisen.

Gemäß einer Weiterbildung der Erfindung wird beim Auswählen des Analysemodells ein binärer Entscheidungsbaum verwendet, anhand dessen eine Mehrzahl von Eigenschaften des zu prüfenden Produkts und/oder eine Mehrzahl von Produktionsparametern beim Auswählen des Analysemodells einbezogen werden. Unter einem binären Entscheidungsbaum kann dabei insbesondere eine Abfolge von Abfragen von Eigenschaften verstanden werden, bei der für jede Abfrage jeweils zwei Antworten möglich sind. Beispielsweise können die Antwortmöglichkeiten "ja/nein", "größer/kleiner" oder ähnliche Antwortmöglichkeiten bestehen. Jeder Antwortmöglichkeit kann dabei eine nachfolgende Abfrage zugeordnet sein, bis schließlich der letzten Abfrage in der Abfolge von Abfragen ein einzelnes Analysemodell, welches dann verwendet wird, zugeordnet ist.

Es ist möglich, dass eine Zuordnungsvorschrift, die jeder Kombination von Werten einer Mehrzahl von Eingangsparametern jeweils ein Analysemodell zuordnet, beim Auswählen des Analysemodells einbezogen wird. Eine solche Zuordnung kann beispielsweise in Form des bereits zuvor beschriebenes binären Entscheidungsbaums vorgenommen werden. Es ist aber ebenfalls möglich, die Zuordnung beispielsweise anhand einer gegebenenfalls mehrdimensionalen Matrix oder anhand einer sonstigen Zuordnungsvorschrift zu realisieren.

Es ist mit Vorteil möglich, dass die Zuordnungsvorschrift als binärer Code abgespeichert ist. Eine solche Implementierung der Zuordnungsvorschrift ist insbesondere dann von Vorteil, wenn beim Auswählen des Analysemodells ein binärer Entscheidungsbaum wie zuvor bereits beschrieben verwendet wird. Es können aber auch ohne Baumstruktur alle Abfragen parallel durchgeführt werden. Jeder möglichen Kombination von binären Werten kann dabei dann ein zu verwendendes Analysemodell zugeordnet sein. Dabei ist es aber auch möglich, bestimmten Kombinationen von Werten, denen keine Produktart sicher zugeordnet werden kann, eine Fehlermeldung oder eine Anweisung, das Verfahren erneut durchzuführen, zuzuordnen.

Es kann mit Vorteil vorgesehen sein, dass der binäre Code auf einem Format basiert, das erweiterbar ist, so dass weitere Produktarten in die Zuordnungsvorschrift aufgenommen werden können. Insbesondere können hierzu am Ende eines binären Datensatzes zusätzliche Bits, die standardmäßig beispielsweise gleich Null sein können, vorhanden sein. Falls die Zuordnungsvorschrift dann komplexer ausgestaltet werden soll bzw. erweitert werden soll, können dann die zusätzlichen Bits aktiviert und mit Inhalt gefüllt werden.

Gemäß einer bevorzugten Ausführungsform ist vorgesehen, dass das Verfahren mit Hilfe eines auf künstlicher Intelligenz und/oder auf maschinellem Lernen basierendem Computermodells ausgeführt wird, wobei das Computermodell hinsichtlich der Zuordnung von Eingangsparametern zu Produktarten trainiert worden ist. Es lässt sich so eine hohe Genauigkeit und Zuverlässigkeit bei der Zuordnung der zu verwendenden Analysemodelle zu den untersuchten Produkten erreichen.

Eine Weiterbildung sieht vor, dass, wenn eine Produktart auf der Fertigungsstraße produziert werden soll, der noch kein Analysemodell zugeordnet wurde, die folgenden Schritte ausgeführt werden:
- Überprüfen, ob ohne Anpassungen ein passendes Analysemodell ausgewählt wird, und
- Wenn ohne Anpassungen kein passendes Analysemodell ausgewählt wird, trainieren des Computermodells, bis eine gewünschte Genauigkeit bei der Zuordnung des Analysemodells zu der Produktart erreicht ist.
Die Zuordnung des passenden Analysemodells zu den zu dem neuen Produkt gehörenden Parametern kann dabei zweckmäßigerweise mit einem KI-Modell bzw. einem Maschine-Learning-Modell erfolgen.

Eine Weiterbildung der Erfindung sieht vor, dass mehrere Produktarten dem gleichen Analysemodell zugeordnet sind. Es können dabei mehrere Analysemodelle zu einer Gruppe oder zu Gruppen von Analysemodellen zusammengefasst werden.

Dabei können Produktinstanzen bzw. Produktarten gruppiert werden, und ein Modell kann für jede Produktart trainiert werden. In einer Bäckerei könnte es beispielsweise verschiedene Arten von Brezeln geben, wie Pfeffer-, Salz- oder Sesambrezeln, die alle zur selben Kategorie gehören und für deren Qualität nur die Form entscheidend ist, die in den zur Auswahl des Analysemodells verwendeten Parametern angegeben ist. Die Gruppierung der ähnlichen Instanzen kann auch anhand von diesen Parametern erfolgen. Auf diese Weise kann sich das System effizienter auf neue Instanzen derselben Produktkategorie einstellen und die Anzahl der trainierten Modelle kann verringert werden.

In einer Fortführung dieses Vorgehens ist es möglich, dass alle Produktarten dem gleichen Analysemodell zugeordnet sind, wobei das Analysemodell derart ausgestaltet ist, dass es aufgrund der zumindest einen ermittelten Eigenschaft des Produkts und/oder aufgrund des zumindest einen ermittelten Produktionsparameters beim Untersuchen des Produkts unterschiedliche Untersuchungskriterien verwendet. Es wird so möglich, die Anzahl der vorgehaltenen Analysemodelle zu reduzieren und im Idealfall auf ein einziges Analysemodell zu beschränken. Mit anderen Worten können dann alle Analysemodelle, die verschiedenen Produktarten zugeordnet sind, in ein Analysemodell integriert werden. Die Eingabe für das Analysemodell kann ein Bild und ein Satz von Parametern sein. Da ein solcher Satz von Parametern als eine Kombination von Attributen modelliert werden kann, kann dieser Satz von Parametern auch in einem binären Format kodiert werden. Um mit neuen Parametern umgehen zu können, können leere Stellen für zukünftige Parameter in dem binären Format berücksichtigt werden. Diese können an das Ende der Parameterliste angehängt werden und zu Beginn den Wert Null aufweisen.

Die Aufgabe wird daher ebenfalls gelöst durch ein Verfahren zum Durchführen einer computergestützten Analyse von optischen Anomalien eines auf einer Fertigungsstraße produzierten Produkts, mit den Schritten
- Ermitteln zumindest einer Eigenschaft des Produkts und/oder zumindest eines Produktionsparameters
- Aufnehmen eines Bildes des Produkts
- Eingeben des Bildes sowie der zumindest einen Eigenschaft und/oder des zumindest einen Produktionsparameters in ein Analysemodell, wobei das Analysemodell zuvor mit strukturgleichen Daten trainiert worden ist, und
- Untersuchen des Produkts unter Verwendung des Analysemodells.

Dieses alternative Verfahren zeichnet sich dadurch aus, dass streng genommen kein Analysemodell ausgewählt wird, sondern dass ein einziges Analysemodell vorhanden ist, dessen Eingangsdaten aber dahingehend erweitert sind, dass nicht lediglich ein Bild des zu analysierenden Produkts als Eingangsgröße verwendet wird, sondern dass weiterhin die zusätzlich ermittelten Eigenschaften des Produkts und/oder die ermittelten Produktionsparameter eingegeben werden. Wenn das Analysemodell ein auf künstlicher Intelligenz basierendes Analysemodell ist und mit entsprechenden Daten trainiert wurde, so lässt sich eine hohe Genauigkeit beim Erkennen von optischen Anomalien verschiedener Produktarten auch mit nur einem einzigen Analysemodell erreichen. Die Möglichkeiten zur Verwendung der verschiedenen Parameter, mit anderen Worten also der Eigenschaften der Produkte und/oder der Produktionsparameter, sind im Wesentlichen identisch zu den zuvor beim Verfahren zur Auswahl eines Analysemodells beschriebenen Möglichkeiten. Ebenso können die Parametersätze in den bereits beschriebenen Formaten abgelegt und abgearbeitet werden.

Die Aufgabe wird weiterhin gelöst durch ein Computerprogramm, umfassend Befehle, die einen Computer veranlassen, ein erfindungsgemäßes Verfahren auszuführen, sowie durch ein Speichermedium auf dem ein solches Computerprogramm gespeichert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine schematische Darstellung einer Produktionsstätte,
- Figur 2: ein Flussdiagramm zur Veranschaulichung eines erfindungsgemäßen Verfahrens,
- Figur 3: eine schematische Darstellung eines Analysemodells,
- Figur 4: eine Möglichkeit zur Auswahl eines Analysemodells, und
- Figur 5: eine alternative Möglichkeit der Kodierung von Parametern.

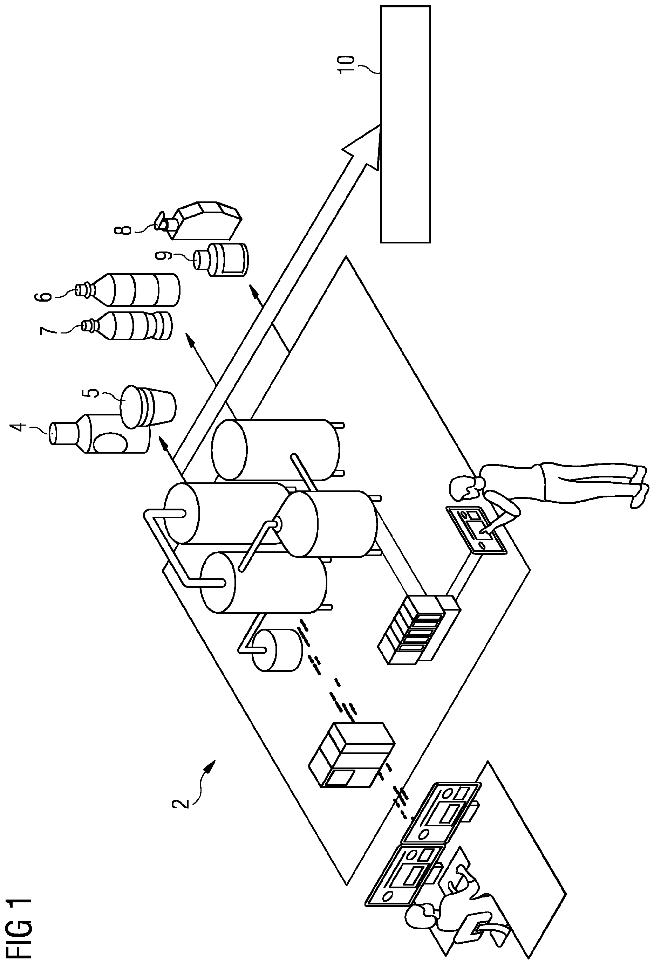

Figur 1 zeigt eine schematische Darstellung einer Produktionsstätte in Form einer Fertigungsstraße 2. Die Fertigungsstraße 2 ist eingerichtet, um unterschiedliche Produkte bzw. Produktarten herzustellen. Als beispielhafte Darstellung sind hier eine erste Produktart 4, eine zweite Produktart 6, eine dritte Produktart 8, eine vierte Produktart 5, eine fünfte Produktart 7 und eine sechste Produktart 9 gezeigt. Die Anzahl der reproduzierbaren Produktarten hängt selbstverständlich lediglich von Art und Konfiguration der Fertigungsstraße 2 ab. Nach der Produktion werden die produzierten Produkte einem Analysesystem 10 zugeführt bzw. von diesem analysiert. Insbesondere kann von dem Analysesystem 10 eine Untersuchung zur Ermittlung optischer Anomalien durchgeführt werden.

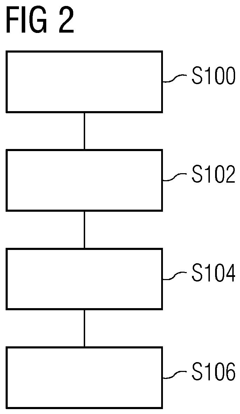

In Figur 2 ist ein Flussdiagramm zur Veranschaulichung eines ersten Ausführungsbeispiels eines erfindungsgemäßen Verfahrens gezeigt.

In einem Schritt S100 wird zumindest ein computergestütztes Analysemodell bereitgestellt. Im Regelfall wird eine Vielzahl von Analysemodellen, beispielsweise mehr als fünf, mehr als zehn oder mehr als 100 Analysemodelle vorhanden sein bzw. bereitgestellt. Bei den Analysemodellen kann es sich um auf künstlicher Intelligenz beruhende Analysemodelle handeln, wie sie zur Bestimmung optischer Anomalien, beispielsweise im Rahmen eines Qualitätssicherungsverfahrens, gebräuchlich sind.

In einem Schritt S102 wird zumindest eine Eigenschaft des auf der Fertigungsstraße produzierten Produkts und/oder zumindest ein Produktionsparameter ermittelt. Die Eigenschaft, die Eigenschaften, der Produktionsparameter und/oder die Produktionsparameter werden dabei vorzugsweise so ausgesucht, dass sie einen Rückschluss aus den ermittelten Werten auf die Produktart des untersuchten Produkts zulassen.

In einem Schritt S104 wird ein einer Produktart zugeordnetes Analysemodell aus einer Mehrzahl von Produktarten zugeordneten Analysemodellen unter Einbeziehung der zumindest einen ermittelten Eigenschaft des Produkts und/oder des zumindest einen ermittelten Produktionsparameters ausgewählt.

Schließlich wird in einem Schritt S106 das Produkt unter Verwendung des ausgewählten Analysemodells untersucht.

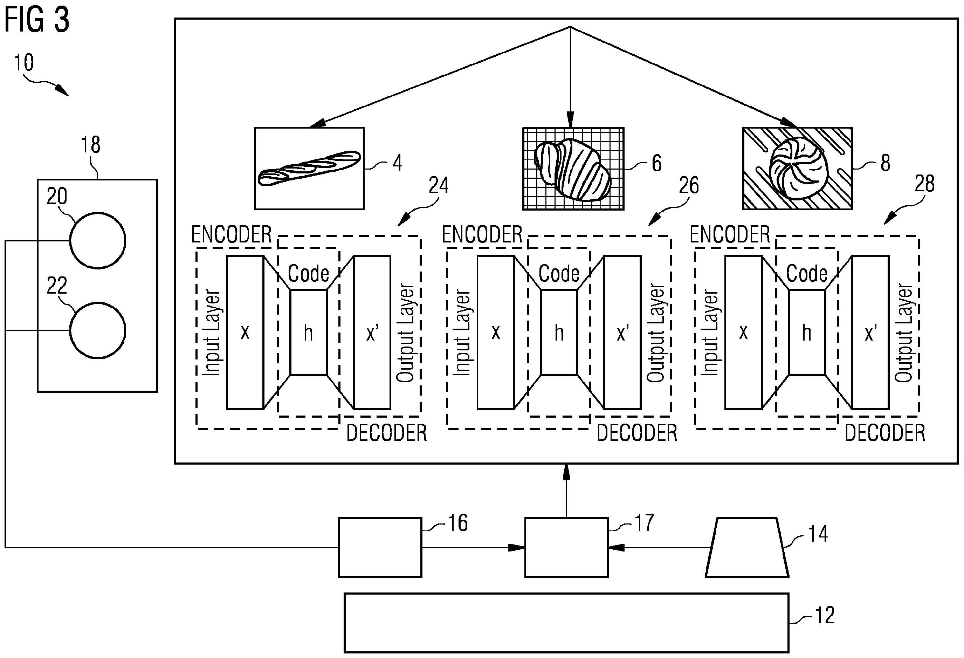

Figur 3 zeigt eine schematische Darstellung eines Analysemodells 10, zugehöriger Teile der Produktionsstraße und des Computersystems, mithilfe dessen das Analysemodell 10 genutzt wird.

Es ist eine zentrale Recheneinheit 17 erkennbar, mithilfe derer die Analyse der Produkte durchgeführt wird. Die Recheneinheit 17 hat dabei Zugriff auf mehrere weitere Komponenten, von denen sie Informationen erhält. Diese können beispielsweise ein Förderband 12, eine Kamera 14 und/oder einer weitere Recheneinheit 16, die beispielsweise eine speicherprogrammierbare Steuerung SPS (englisch: programmable logic controller, PLC) sein kann. Die Recheneinheit 17 erhält, im dargestellten Ausführungsbeispiel vermittelt durch die weitere Recheneinheit 16, Zugriff auf einen Parametersatz 18. Dort sind Werte für einen ersten Parameter 20 und einen zweiten Parameter 22 hinterlegt. Die Anzahl der Parameter kann grundsätzlich beliebig groß sein und hängt von der Anzahl der verschiedenen Produktarten sowie von den konkreten Eigenschaften der Produktdaten ab.

Die Recheneinheit 17 ermittelt dann unter Einbeziehung der ermittelten Produkteigenschaften und/oder der ermittelten Produktionsparameter durch einen Abgleich mit den Werten für den ersten Parameter 20 und den zweiten Parameter 22 das zu verwendende Analysemodell. Die Analysemodelle werden in der Figur 3 durch den ersten Autoencoder 24, den zweiten Autoencoder 26 und den dritten Autoencoder 28 symbolisiert. Der erste Autoencoder 24 ist dabei einer ersten Produktart 4 zugeordnet, der zweite Autoencoder 26 ist einer zweiten Produktart 6 zugeordnet, und der dritte Autoencoder 28 ist einer dritten Produktart 8 zugeordnet. Den unterschiedlichen Produktarten 4, 6 und 8 sind dabei auch unterschiedliche Werte oder Wertekombinationen für den ersten Parameter 20 und den zweiten Parameter 22 zugeordnet, sodass anhand dieser Werte die Recheneinheit 17 in die Lage versetzt wird, dass korrekte Analysemodell zur Analyse des jeweiligen Produkts auszuwählen. Dabei werden, wenn alle Analysemodelle die gleiche Form und Architektur haben (d. h. die Eingabedaten für alle Modelle haben die gleiche Größe), nur die Gewichtungen des entsprechenden Analysemodells geladen, andernfalls wird auch die Modellarchitektur geladen.

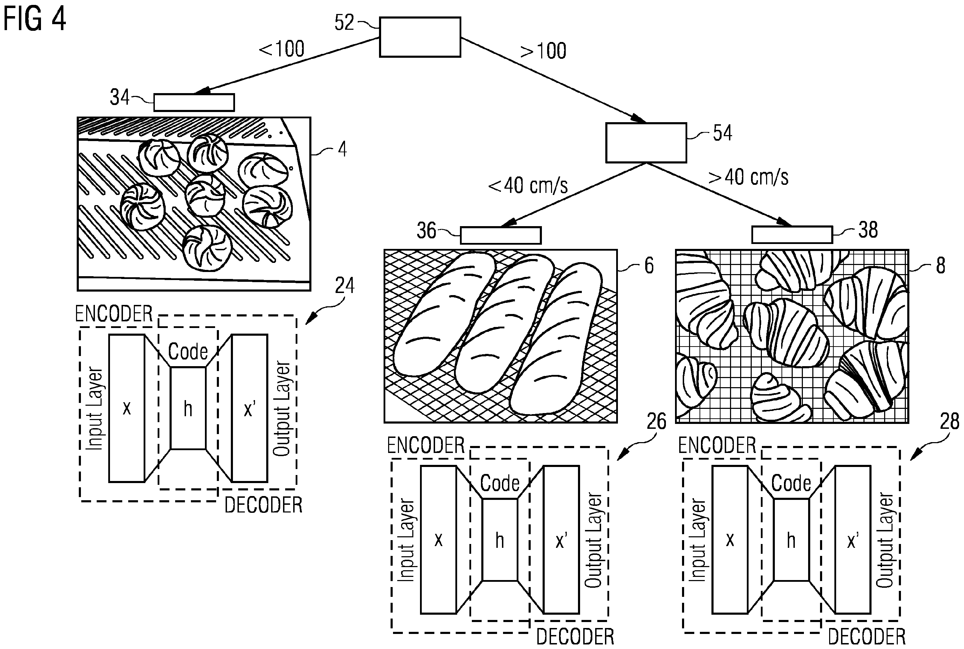

Figur 4 zeigt eine Möglichkeit, wie die unterschiedlichen Analysemodelle 34, 36 und 38 anhand der ermittelten Eigenschaften und/oder anhand der ermittelten Produktionsparameter ausgewählt werden können. Es wird im dargestellten Ausführungsbeispiel hierfür ein binärer Entscheidungsbaum verwendet. Dabei verknüpft das erste Analysemodell 34 eine erste Produktart 4 mit dem ersten Autoencoder 24, das zweite Analysemodell 36 verknüpft den zweiten Autoencoder 26 mit der zweiten Produktart 6, und das dritte Analysemodell 38 verknüpft den dritten Autoencoder 28 mit der dritten Produktart 8.

An einer ersten Gabelung 52 wird dabei ein erster ermittelter Produktionsparameter oder eine erste ermittelte Eigenschaft des zu analysierenden Produkts ausgewertet. In dem in der Figur 4 dargestellten Ausführungsbeispiel ist dies eine Temperatur, die beispielsweise eine Produktionstemperatur oder eine Temperatur des Produkts sein kann. Liegt der Wert der Temperatur im dargestellten Ausführungsbeispiel unterhalb von 100 °C, so wird die in der Figur linke Abzweigung der Gabelung 52 genommen. Entsprechend wird das zu untersuchende Produkt als zu der ersten Produktart 4 gehörig klassifiziert. Es wird daher der erste Autoencoder 24 zur Ermittlung potentieller Anomalien verwendet.

Liegt die Temperatur oberhalb von 100 °C, so wird die rechte Abzweigung der Gabelung 52 genommen und das Auswahlverfahren an der zweiten Gabelung 54 fortgesetzt. Hier wird ein zweiter Parameter, im dargestellten Ausführungsbeispiel eine Fließbandgeschwindigkeit, analysiert. Liegt die ermittelte Fließbandgeschwindigkeit bei weniger als 40 cm/s, so wird die linke Abzweigung der zweiten Gabelung 54 genommen und das zu untersuchende Produkt als zu der zweiten Produktart 6 gehörig klassifiziert. Es wird daher der zweite Autoencoder 26 zur Ermittlung potentieller Anomalien verwendet.

Liegt die ermittelte Fließbandgeschwindigkeit bei mehr als 40 cm/s, so wird die rechte Abzweigung der zweiten Gabelung 54 genommen und das zu untersuchende Produkt als zu der dritten Produktart 8 gehörig klassifiziert. Es wird daher der zweite Autoencoder 28 zur Ermittlung potentieller Anomalien verwendet.

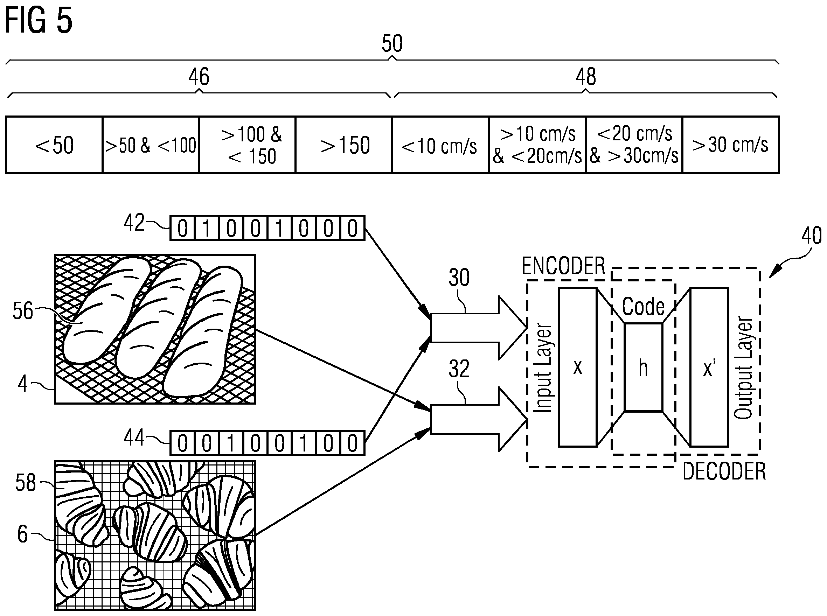

Figur 5 zeigt eine alternative Möglichkeit der Kodierung von Parametern 46, 48, welche dann zur Auswahl des benötigten Analysemodells herangezogen werden können. Es sind dabei wieder der erste Parameter 46, welcher im dargestellten Ausführungsbeispiel eine Temperatur ist, sowie der zweite Parameter 48, welcher im dargestellten Ausführungsbeispiel wiederum eine Fließbandgeschwindigkeit ist, als ermittelte Größen dargestellt. Anders als im in Figur 4 dargestellten Ausführungsbeispiel wird hier kein binärer Entscheidungsbaum verwendet, sondern es werden unterschiedliche Wertebereiche der Parameter 46, 48 in einem Binärcode abgelegt. Im dargestellten Ausführungsbeispiel sind jeweils die ersten 4 Bits der Binärcodes 44, 46 unterschiedlichen Temperaturbereichen zugeordnet, und die zweiten 4 Bits der Binärcodes 44, 46 sind unterschiedlichen Bereichen der Fließbandgeschwindigkeit zugeordnet. Zweckmäßigerweise wird dabei das jeweils zutreffende Bit gleich 1 gesetzt, und die jeweils nicht zutreffenden Bits werden gleich 0 gesetzt.

Im dargestellten Ausführungsbeispiel entspricht das erste Bit einem Temperaturbereich von unter 50 °C, das zweite Bit entspricht einem Temperaturbereich von 50-100 °C, das dritte Bit entspricht einem Temperaturbereich von 100-150 °C, und das vierte Bit entspricht einem Temperaturbereich von über 150 °C. Es sind also die ersten 4 Bits der Temperatur zugeordnet, und die zweiten 4 Bits, mit anderen Worten also die Bits 5 bis 8, sind der Fließbandgeschwindigkeit zugeordnet. Dabei entspricht das fünfte Bit einer Fließbandgeschwindigkeit von unter 10 cm/s, das sechste Bit entspricht einer Fließbandgeschwindigkeit von 10 cm/s bis 20 cm/s, das siebte Bit entspricht einer Fließbandgeschwindigkeit von 20 cm/s bis 30 cm/s, und das achte Bit entspricht einer Fließbandgeschwindigkeit von über 30 cm/s.

Für die erste Produktart 4 sind dabei eine Temperatur zwischen 50 °C und 100 °C und eine Fließbandgeschwindigkeit von unter 10 cm/s ermittelt worden, sodass der zugehörige erste Binärcode 42 "0100100" lautet. Für die zweite Produktart 6 sind eine Temperatur zwischen 100 °C 150 °C sowie eine Fließbandgeschwindigkeit zwischen 10 cm/s und 20 cm/s ermittelt worden, sodass der zugehörige zweite Binärcode "00100100" lautet.

Im dargestellten Ausführungsbeispiel ist für alle eingerichteten Produktarten ein gemeinsamer Autoencoder 40 trainiert worden, in den jeweils ein von einer Kamera aufgenommenes Bild 56, 58 sowie der jeweils ermittelte Parametersatz bzw. Binärcode 42, 44 eingegeben werden. Entsprechende Eingangswerte sind zuvor bereits zum Trainieren des Autoencoders 40 verwendet worden, sodass im dargestellten Ausführungsbeispiel ein einziger Autoencoder bzw. ein einziges Analysemodell zur Analyse des jeweiligen Produkts verwendet werden kann.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 2: Fertigungsstraße
- 4: erste Produktart
- 5: vierte Produktart
- 6: zweite Produktart
- 7: fünfte Produktart
- 8: dritte Produktart
- 9: sechste Produktart
- 10: Analysesystem
- 12: Förderband
- 14: Kamera
- 16: "Computer" PLC
- 17: Recheneinheit
- 18: Parametersatz
- 20: erster Parameter
- 22: zweiter Parameter
- 24: erster Autoencoder
- 26: zweiter Autoencoder
- 28: dritter Autoencoder
- 30: erster Datenkanal
- 32: zweiter Datenkanal
- 34: erstes Analysemodell
- 36: zweites Analysemodell
- 38: drittes Analysemodell
- 40: Autoencoder
- 42: Binärcode
- 44: Binärcode
- 46: Parameter
- 48: Parameter
- 50: Parametersatz
- 52: erste Gabelung
- 54: zweite Gabelung
- 56: Bild
- 58: Bild

## Patentansprüche

1. Verfahren zur Auswahl eines computergestützten Analysemodells (34, 36, 38) zur Verwendung bei der Analyse von optischen Anomalien eines auf einer Fertigungsstraße (2) produzierten Produkts, mit den Schritten
- Bereitstellen zumindest eines computergestützten Analysemodells (34, 36, 38)
- Ermitteln zumindest einer Eigenschaft des Produkts und/oder zumindest eines Produktionsparameters
- Auswählen eines einer Produktart zugeordneten Analysemodells (34, 36, 38) aus einer Mehrzahl von jeweils Produktarten (4, 6, 8) zugeordneten Analysemodellen (34, 36, 38) unter Einbeziehung der zumindest einen ermittelten Eigenschaft des Produkts und/oder des zumindest einen ermittelten Produktionsparameters
- Untersuchen des Produkts unter Verwendung des ausgewählten Analysemodells (34, 36, 38).

2. Verfahren nach Anspruch 1, **dadurch gekennzeichnet, dass** das Produkt direkt nach einem Wechsel einer Produktart (4, 6, 8) der auf der Fertigungsstraße (2) produzierten Produkte untersucht wird.

3. Verfahren nach einem der vorstehenden Ansprüche, **dadurch gekennzeichnet, dass** das ausgewählte Analysemodell (34, 36, 38) aktiviert bleibt, bis erkannt wird, dass eine neue Produktart (4, 6, 8) auf der Fertigungsstraße (2) produziert wird.

4. Verfahren nach einem der vorstehenden Ansprüche, **dadurch gekennzeichnet, dass** beim Ermitteln der zumindest einen Eigenschaft des Produkts und/oder des zumindest einen Produktionsparameters ein nicht-optisches Verfahren verwendet wird.

5. Verfahren nach einem der vorstehenden Ansprüche, **dadurch gekennzeichnet, dass** beim Ermitteln zumindest einer Eigenschaft des Produkts eine oder mehrere der folgenden Eigenschaften ermittelt werden: Eine Größe des Produkts, ein Gewicht des Produkts, eine Form des Produkts, eine Farbe des Produkts, und eine Temperatur des Produkts.

6. Verfahren nach einem der vorstehenden Ansprüche, **dadurch gekennzeichnet, dass** beim Ermitteln zumindest eines Produktionsparameters eine Geschwindigkeit eines Förderbands (12) und/oder eine Produktionstemperatur ermittelt wird.

7. Verfahren nach einem der vorstehenden Ansprüche, **dadurch gekennzeichnet, dass** zusätzlich zu der ermittelten Eigenschaft des Produkts und/oder zusätzlich zu dem Produktionsparameter ein Identifikationscode des Produkts ermittelt wird.

8. Verfahren nach einem der vorstehenden Ansprüche, **dadurch gekennzeichnet, dass** beim Auswählen des Analysemodells (34, 36, 38) ein binärer Entscheidungsbaum verwendet wird, anhand dessen eine Mehrzahl von Eigenschaften des zu prüfenden Produkts und/oder eine Mehrzahl von Produktionsparametern beim Auswählen des Analysemodells (34, 36, 38) einbezogen werden.

9. Verfahren nach einem der vorstehenden Ansprüche, **dadurch gekennzeichnet, dass** eine Zuordnungsvorschrift, die jeder Kombination von Werten einer Mehrzahl von Eingangsparametern jeweils ein Analysemodell zuordnet, beim Auswählen des Analysemodells (34, 36, 38) einbezogen wird.

10. Verfahren nach einem der vorstehenden Ansprüche, **dadurch gekennzeichnet, dass** das Verfahren mit Hilfe eines auf künstlicher Intelligenz und/oder auf maschinellem Lernen basierendem Computermodells ausgeführt wird, wobei das Computermodell hinsichtlich der Zuordnung von Eingangsparametern zu Produktarten (4, 6, 8) trainiert worden ist.

11. Verfahren nach Anspruch 10, **dadurch gekennzeichnet, dass**, wenn eine Produktart (4, 6, 8) auf der Fertigungsstraße (2) produziert werden soll, der noch kein Analysemodell (34, 36, 38) zugeordnet wurde, die folgenden Schritte ausgeführt werden:
- Überprüfen, ob ohne Anpassungen ein passendes Analysemodell (34, 36, 38) ausgewählt wird, und
- wenn ohne Anpassungen kein passendes Analysemodell (34, 36, 38) ausgewählt wird, trainieren des Computermodells, bis eine gewünschte Genauigkeit bei der Zuordnung des Analysemodells (34, 36, 38) zu der Produktart (4, 6, 8) erreicht ist.

12. Verfahren nach einem der vorstehenden Ansprüche, **dadurch gekennzeichnet, dass** mehrere Produktarten (4, 6, 8) dem gleichen Analysemodell zugeordnet sind.

13. Verfahren zum Durchführen einer computergestützten Analyse von optischen Anomalien eines auf einer Fertigungsstraße (2) produzierten Produkts, mit den Schritten
- Ermitteln zumindest einer Eigenschaft des Produkts und/oder zumindest eines Produktionsparameters
- Aufnehmen eines Bildes (56, 58) des Produkts
- Eingeben des Bildes (56, 58) sowie der zumindest einen Eigenschaft und/oder des zumindest einen Produktionsparameters in ein Analysemodell, wobei das Analysemodell zuvor mit strukturgleichen Daten trainiert worden ist, und
- Untersuchen des Produkts unter Verwendung des Analysemodells.

14. Computerprogramm, umfassend Befehle, die bei der Ausführung des Programms durch einen Computer diesen veranlassen, ein Verfahren nach einem der Ansprüche 1 bis 13 auszuführen.

15. Maschinenlesbares Speichermedium, auf dem das Computerprogramm nach Anspruch 14 gespeichert ist.
